# EUROPEAN PATENT APPLICATION

(11) **EP 1 744 255 A1**
(43) Date of publication of application: **17.01.2007**
(21) Application number: 05728739.3
(22) Date of filing: 06.04.2005
(51) Int. Cl.: G06F 17/21

(54) **DOCUMENT PROCESSING DEVICE AND DOCUMENT PROCESSING METHOD**

(30) Priority: 08.04.2004 JP 2004114707
(71) Applicant: JustSystems Corporation, Tokushima-shi, Tokushima 771-0189 (JP)
(72) Inventor: HIYAMA, Masayuki;, uro-ku Tokyo 1530051; (JP); WAKE, Nobuaki;, -shi Tokushima 7710189; (JP); OSHIMA, Norio;, -shi Tokushima 7710189; (JP); HARA, Masafumi;, -shi Tokushima 7710189; (JP)
(74) Representative: Palmer, Jonathan R.
(86) International application number: PCT/JP2005/006798
(87) International publication number: WO 2005/098660

(57) **Abstract**

A technique is provided for effectively utilizing data included in a document described in a markup language. A document processing apparatus 100 provides processing systems for displaying/editing a document, such as an HTML unit 150 for displaying/editing an HTML document, an SVG unit 160 for displaying/editing an SVG document, etc., in increments of vocabularies in the form of plug-ins. A calculation unit 190 is a plug-in for processing a vocabulary used for describing calculation expressions. In the case that any element value or any attribute value of an element included in a processing target document is described by a calculation expression using another data set as reference data, the calculation unit 190 executes a calculation according to the calculation expression with the acquired reference data, and substitutes the calculation results for the element value or the attribute value.

## Description

### Technical Field

The present invention relates to a document processing technique, and particularly to a document processing apparatus and a document processing method for processing a document described in a markup language.

### Background Art

The XML format attracts attention as a format that allows the user to share data with other users via a network. This promotes development of applications for creating, displaying, and editing XML documents (see Patent document 1, for example). The XML documents are created based upon a vocabulary (tag set) defined according to a document type definition.

### [Patent Document 1]

Japanese Patent Application Laid-open No. 2001-290804

### Disclosure of Invention

### [Problems to be Solved by the Invention]

Let us consider a situation in which a document created using a certain application includes embedded data or an embedded document created using another application. Conventionally, in this case, such embedded data is handled as so-called black-box data which cannot be used as reference data. In order to effectively utilize the data in the document, there is a demand for a technique that allows the user to utilize any data included in the document as reference data.

The present invention has been made in view of the aforementioned problems. Accordingly, it is an object thereof to provide a technique that allows the user to effectively utilize the data included in a document described in a markup language.

### [Means for Solving the Problems]

An aspect of the present invention relates to a document processing apparatus. The document processing apparatus comprises: a processing system operable to display a document described in a markup language, and operable to allow a user to edit the document; and a calculation unit which, in the case that the element value or the attribute value of a component included in the document is described as a calculation expression using another data set as a reference, acquires the referenced data set in order to execute the calculation expression, and substitutes the calculation results for the element value or the attribute value.

The markup language employed in the present invention may be a form of XML. Examples of such forms of XML include XHTML, SVG, MathML, etc. Also, examples of the markup languages include SGML, HTML, etc. Such an arrangement enables a document to be described by a calculation expression using another data set as reference data. This allows data to be more effectively utilized, thereby improving the ease-of-use for the user. The aforementioned reference data may be described in another markup language that differs from that used in the aforementioned component that refers to the reference data.

The calculation expression may be described in a markup language for describing the calculation expression. With such an arrangement, the calculation unit may be provided in the form of a plug-in which interprets and processes a dedicated markup language for describing calculation expressions. The calculation expression may also be described in a definition file, which is an external reference file used by the document.

Also, an arrangement may be made in which, upon modification of the reference data, the calculation unit executes the calculation again, according to the calculation expression, and substitutes the new calculation results for the element value or the attribute value. A further arrangement may be made in which, upon substitution of new calculation results, the processing system updates the display. Such an arrangement allows the reference data to be appropriately updated, thereby updating the display in real time according to the modification of the reference data.

The document processing apparatus may further include a creating unit for creating data in a format based upon a document object model, which provides an access method for handling a document in the form of data. The creating unit may create document object model data corresponding to the document, and the processing system may display the document with reference to the document object model data. Also, an arrangement may be made in which the calculation unit identifies and acquires the reference data from among the document object model data sets. Even in the case of processing a document described in multiple different markup languages, such an arrangement enables every part of the document to be accessed by converting the relevant parts of the document into predetermined object model data. This allows the calculation unit to easily identify and acquire the reference data.

Another aspect of the present invention relates to a document processing method. The document processing method comprises the following: before a document described in a markup language is displayed on a display device, making a determination whether or not the element value or the attribute value of a component included in the document is described as a calculation expression using another data set as reference data; and in the case that the element value or the attribute value is described in the calculation expression, acquiring the reference data in order to execute a calculation according to the calculation expression, and substituting the calculation results for the element value or the attribute value.

Note that any combination of the aforementioned components or any manifestation of the present invention realized by modification of a method, device, system, and so forth, is effective as an embodiment of the present invention.

### [Advantages]

The present invention provides a technique for effectively utilizing data included in a document described in a markup language.

### Brief Description of the Drawings

FIG. 1 is a diagram which shows a configuration of a document processing apparatus according to a first embodiment of the present invention.
FIG. 2 is a diagram which shows an example of an XML document which is to be edited by the document processing apparatus according to the first embodiment.
FIG. 3 is a diagram which shows an example in which the XML document shown in FIG. 2 is mapped to a table described in HTML.
FIG. 4 is a diagram which shows an example of a VC definition file used for mapping the XML document shown in FIG. 2 to the table shown in FIG. 3.
FIG. 5 is a diagram which shows an example of a screen on which the XML document shown in FIG. 2 is displayed after having been mapped to HTML according to the correspondence shown in FIG. 3.
FIG. 6 is a diagram which shows an example of a graphical user interface provided to the user by a VC definition file creating unit.
FIG. 7 is a diagram which shows another example of a screen layout created by the VC definition file creating unit.
FIG. 8 is a diagram which shows an example of an editing screen for an XML document, as provided by the document processing apparatus.
FIG. 9 is a diagram which shows another example of an XML document which is to be edited by the document processing apparatus according to the first embodiment.
FIG. 10 is a diagram which shows an example of a screen on which the document shown in FIG. 9 is displayed.
FIG. 11 is a diagram which shows a configuration of a document processing apparatus according to a second embodiment of the present invention.
FIG. 12 is a diagram which shows an example of a document which is to be processed by the document processing apparatus shown in Fig. 11.
FIG. 13 is a diagram which shows an example of a VC definition file used by the VC function for displaying the XML document shown in Fig. 12.
Fig. 14 is a diagram which shows an example of a display template described in the VC definition file shown in Fig. 13.
Fig. 15 is a diagram which shows an example of a display template for an element which stores the details of the route of the business travel for the travel expense, and which is one of the display templates described in the VC definition file shown in Fig. 13.
Fig. 16 is a diagram which shows an example of a calculation definition file applied to the XML document shown in Fig. 12.
Fig. 17 is a diagram which shows an example of a screen on which the document shown in Fig. 12 is displayed according to the VC definition file shown in Figs. 13 through 15.
Fig. 18 is a diagram which shows an example of a screen as modified from the editing screen shown in Fig. 17 according to a change in the staff number.
Fig. 19 is a diagram which shows an example of a screen as modified from the editing screen shown in Fig. 17 according to the addition of item details for the business travel, and the operation of changing the travel expenses.
FIG. 20 is a diagram which shows another example of a document which is to be processed by the document processing apparatus according to the second embodiment.
FIG. 21 is a diagram which shows an example of a VC definition file used by the VC function for displaying the XML document shown in Fig. 20.
Fig. 22 is a diagram which shows an example of a screen on which the document shown in Fig. 20 is displayed according to the VC definition file shown in Fig. 21.
Fig. 23 is a diagram which shows an example of a screen as modified from the editing screen shown in Fig. 22 according to a change in a sample value.

### Reference Numerals

- 100: document processing apparatus
- 110: main control unit
- 120: editing unit
- 130: DOM unit
- 132: DOM provider
- 134: DOM builder
- 136: DOM writer
- 140: CSS unit
- 150: HTML unit
- 160: SVG unit
- 180: VC unit
- 182: mapping unit
- 184: VC definition file acquiring unit
- 186: VC definition file generator
- 190: calculation unit
- 192: calculation definition file acquiring unit
- 194: execution unit

### Best Mode for Carrying Out the Invention

### (First embodiment)

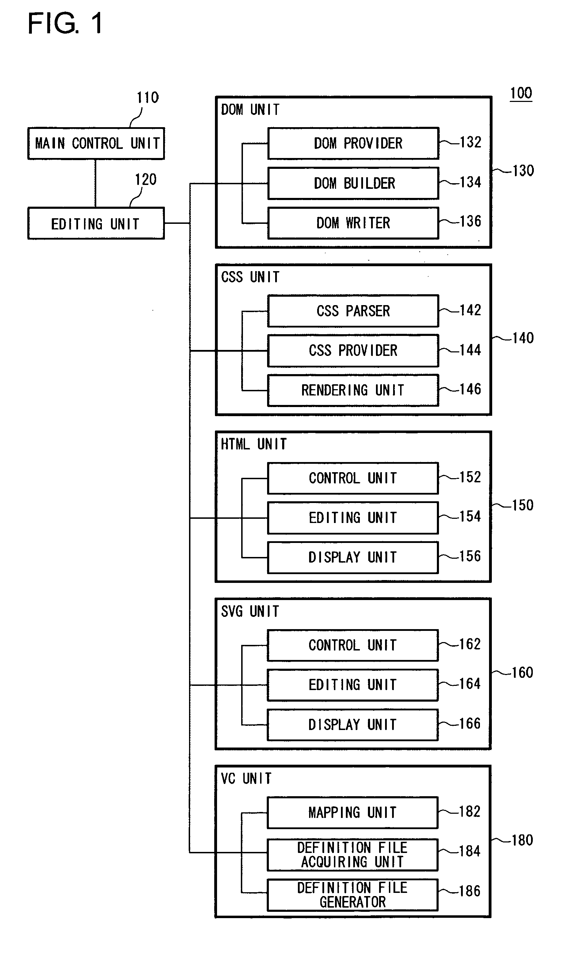

FIG. 1 illustrates a structure of a document processing apparatus 100 according to an exemplary but non-limiting embodiment of the present invention. The document processing apparatus 100 processes a structured document where data in the document are classified into a plurality of components having a hierarchical structure. Represented in the present embodiment is an example in which an XML document, as one type of a structured document, is processed. The document processing apparatus 100 is comprised of a main control unit 110, an editing unit 120, a DOM unit 130, a CSS unit 140, an HTML unit 150, an SVG unit 160 and a VC unit 180 which serves as an example of a conversion unit. In terms of hardware components, these unit structures may be realized by any conventional processing system or equipment, including a CPU or memory of any computer, a memory-loaded program, or the like. Here, the drawing shows a functional block configuration which is realized by cooperation between the hardware components and software components. Thus, it would be understood by those skilled in the art that these function blocks can be realized in a variety of forms by hardware only, software only or the combination thereof.

The main control unit 110 provides for the loading of a plug-in or a framework for executing a command. The editing unit 120 provides a framework for editing XML documents. Display and editing functions for a document in the document processing apparatus 100 are realized by plug-ins, and the necessary plug-ins are loaded by the main control unit 110 or the editing unit 120 according to the type of document under consideration. The main control unit 110 or the editing unit 120 determines which vocabulary or vocabularies describe the content of an XML document to be processed, by referring to a name space of the document to be processed, and loads a plug-in for display or editing corresponding to the thus determined vocabulary so as to execute the display or the editing. For instance, an HTML unit 150, which displays and edits HTML documents, and an SVG unit 160, which displays and edits SVG documents, are implemented in the document processing apparatus 100. That is, a display system and an editing system are implemented as plug-ins for each vocabulary (tag set), so that when an HTML document and an SVG document are edited, the HTML unit 150 and the SVG unit 160 are loaded, respectively. As will be described later, when compound documents which contain both the HTML and SVG components are to be processed, both the HTML unit 150 and the SVG unit 160 are loaded.

By implementing the above structure, a user can select so as to install only necessary functions, and can add or delete a function or functions at a later stage, as appropriate. Thus, the storage area of a recording medium, such as a hard disk, can be effectively utilized, and the wasteful use of memory can be prevented at the time of executing programs. Furthermore, since the capability of this structure is highly expandable, a developer can deal with new vocabularies in the form of plug-ins, and thus the development process can be readily facilitated. As a result, the user can also add a function or functions easily at low cost by adding a plug-in or plug-ins.

The editing unit 120 receives an event, which is an editing instruction, from the user via the user interface. Upon reception of such an event, the editing unit 120 notifies a suitable plug-in or the like of this event, and controls the processing so as to redo this event, cancel (undo) this event, etc.

The DOM unit 130 includes a DOM provider 132, a DOM builder 134 and a DOM writer 136. The DOM unit 130 realizes functions in compliance with a document object model (DOM), which is defined to provide an access method used for handling data in the form of an XML document. The DOM provider 132 is an implementation of a DOM that satisfies an interface defined by the editing unit 120. The DOM builder 134 generates DOM trees from XML documents. As will be described later, when an XML document to be processed is mapped to another vocabulary by the VC unit 180, a source tree, which corresponds to the XML document in a mapping source, and a destination tree, which corresponds to the XML document in a mapping destination, are generated. At the end of editing, for example, the DOM writer 136 outputs a DOM tree as an XML document.

The CSS unit 140, which provides a display function conforming to CSS, includes a CSS parser 142, a CSS provider 144 and a rendering unit 146. The CSS parser 142 has a parsing function for analyzing the CSS syntax. The CSS provider 144 is an implementation of a CSS object and performs CSS cascade processing on the DOM tree. The rendering unit 146 is a CSS rendering engine and is used to display documents, described in a vocabulary such as HTML, which are laid out using CSS.

The HTML unit 150 displays or edits documents described in HTML. The SVG unit 160 displays or edits documents described in SVG. These display/editing systems are realized in the form of plug-ins, and each system is comprised of a display unit (also designated herein as a "canvas") 156 and 166, which displays documents, a control unit (also designated herein as an "editlet") 152 and 162, which transmits and receives events containing editing commands, and an edit unit (also designated herein as a "zone") 154 and 164, which edits the DOM according to the editing commands. Upon the control unit 152 or 162 receiving a DOM tree editing command from an external source, the edit unit 154 or 164 modifies the DOM tree and the display unit 156 or 166 updates the display. These units have a structure similar to the framework of the so-called MVC (Model-View-Controller) pattern. With such a structure, in general, the display units 156 and 166 correspond to the "View". On the other hand, the control units 152 and 162 correspond to the "Controller", and the DOM instance corresponds to the "Model". The document processing apparatus 100 according to the present embodiment allows an XML document to be edited according to each given vocabulary, as well as providing a function of editing the HTML document in the form of a tree display. The HTML unit 150 provides a user interface for editing an HTML document in a manner similar to a word processor, for example. On the other hand, the SVG unit 160 provides a user interface for editing an SVG document in a manner similar to an image drawing tool.

The VC unit 180 includes a mapping unit 182, a definition file acquiring unit 184 and a definition file generator 186. The VC unit 180 performs mapping of a document, which has been described in a particular vocabulary, to another given vocabulary, thereby providing a framework that allows a document to be displayed and edited by a display/editing plug-in corresponding to the vocabulary to which the document is mapped. In the present embodiment, this function is called a vocabulary connection (VC). In the VC unit 180, the definition file acquiring unit 184 acquires a script file in which the mapping definition is described. Here, the definition file specifies the correspondence (connection) between the nodes for each node. Furthermore, the definition file may specify whether or not editing of the element values or attribute values is permitted. Furthermore, the definition file may include operation expressions using the element values or attribute values for the node. Detailed description will be made later regarding these functions. The mapping unit 182 instructs the DOM builder 134 to generate a destination tree with reference to the script file acquired by the definition file acquiring unit 184. This manages the correspondence between the source tree and the destination tree. The definition file generator 186 offers a graphical user interface which allows the user to generate a definition file.

The VC unit 180 monitors the connection between the source tree and the destination tree. Upon reception of an editing instruction from the user via a user interface provided by a plug-in that handles a display function, the VC unit 180 first modifies a relevant node of the source tree. As a result, the DOM unit 130 issues a mutation event indicating that the source tree has been modified. Upon reception of the mutation event thus issued, the VC unit 180 modifies a node of the destination tree corresponding to the modified node, thereby updating the destination tree in a manner that synchronizes with the modification of the source tree. Upon reception of a mutation event that indicates that the destination tree has been modified, a plug-in having functions of displaying/editing the destination tree, e.g., the HTML unit 150, updates a display with reference to the destination tree thus modified. Such a structure allows a document described in any vocabulary, even a minor vocabulary used in a minor user segment, to be converted into a document described in another major vocabulary. This enables such a document described in a minor vocabulary to be displayed, and provides an editing environment for such a document.

An operation in which the document processing apparatus 100 displays and/or edits documents will now be described below. When the document processing apparatus 100 loads a document to be processed, the DOM builder 134 generates a DOM tree from the XML document. The main control unit 110 or the editing unit 120 determines which vocabulary describes the XML document by referring to a name space of the XML document to be processed. If the plug-in corresponding to the vocabulary is installed in the document processing apparatus 100, the plug-in is loaded so as to display/edit the document. If, on the other hand, the plug-in is not installed in the document processing apparatus 100, a check shall be made to see whether a mapping definition file exists or not. And if the definition file exits, the definition file acquiring unit 184 acquires the definition file and generates a destination tree according to the definition, so that the document is displayed/edited by the plug-in corresponding to the vocabulary which is to be used for mapping. If the document is a compound document containing a plurality of vocabularies, relevant portions of the document are displayed/edited by plug-ins corresponding to the respective vocabularies, as will be described later. If the definition file does not exist, a source or tree structure of a document is displayed and the editing is carried out on the display screen.

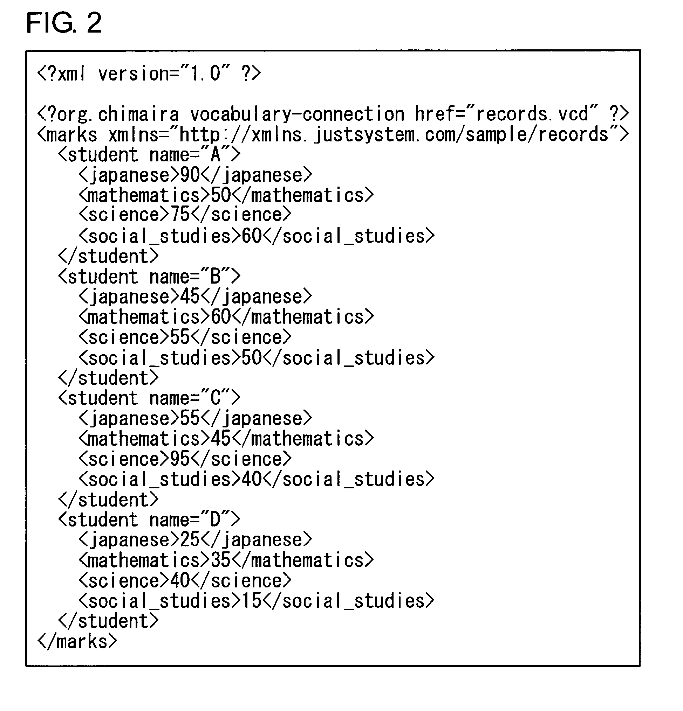

FIG. 2 shows an example of an XML document to be processed. According to this exemplary illustration, the XML document is used to manage data concerning grades or marks that students have earned. A component "marks", which is the top node of the XML document, includes a plurality of components "student" provided for each student under "marks". The component "student" has an attribute "name" and contains, as child elements, the subjects "japanese", "mathematics", "science", and "social_studies". The attribute "name" stores the name of a student. The components "japanese", "mathematics", "science" and "social_studies" store the test scores for the subjects Japanese, mathematics, science, and social studies, respectively. For example, the marks of a student whose name is "A" are "90" for Japanese, "50" for mathematics, "75" for science and "60" for social studies. Hereinafter, the vocabulary (tag set) used in this document will be called the "marks managing vocabulary".

Here, the document processing apparatus 100 according to the present exemplary embodiment does not have a plug-in which conforms to or handles the display/editing of marks managing vocabularies. Accordingly, before displaying such a document in a manner other than the source display manner or the tree display manner, the above-described VC function is used. That is, there is a need to prepare a definition file for mapping the document, which has been described in the marks managing vocabulary, to another vocabulary, which is supported by a corresponding plug-in, e.g., HTML or SVG. Note that description will be made later regarding a user interface that allows the user to create the user's own definition file. Now, description will be made below regarding a case in which a definition file has already been prepared.

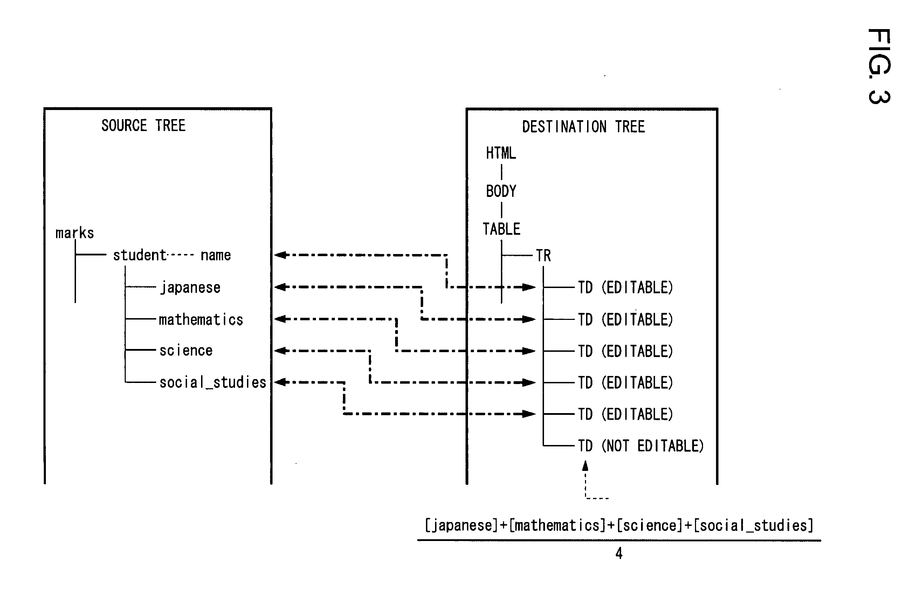

FIG. 3 shows an example in which the XML document shown in FIG. 2 is mapped to a table described in HTML. In an example shown in FIG. 3, a "student" node in the marks managing vocabulary is associated with a row ("TR" node) of a table ("TABLE" node) in HTML. The first column in each row corresponds to an attribute value "name", the second column to a "japanese" node element value, the third column to a "mathematics" node element value, the fourth column to a "science" node element value and the fifth column to a "social_studies" node element value. As a result, the XML document shown in FIG. 2 can be displayed in an HTML tabular format. Furthermore, these attribute values and element values are designated as being editable, so that the user can edit these values on a display screen using an editing function of the HTML unit 150. In the sixth column, mathematical expression is designated for calculating a weighted average of the marks for Japanese, mathematics, science and social studies, and average values of the marks for each student are displayed. In this manner, more flexible display can be effected by making it possible to specify the mathematical expression in the definition file, thus improving the users' convenience at the time of editing. In this example shown in FIG. 3, editing is designated as not being possible in the sixth column, so that the average value alone cannot be edited individually. Thus, in the mapping definition it is possible to specify editing or no editing so as to protect the users against the possibility of performing erroneous operations.

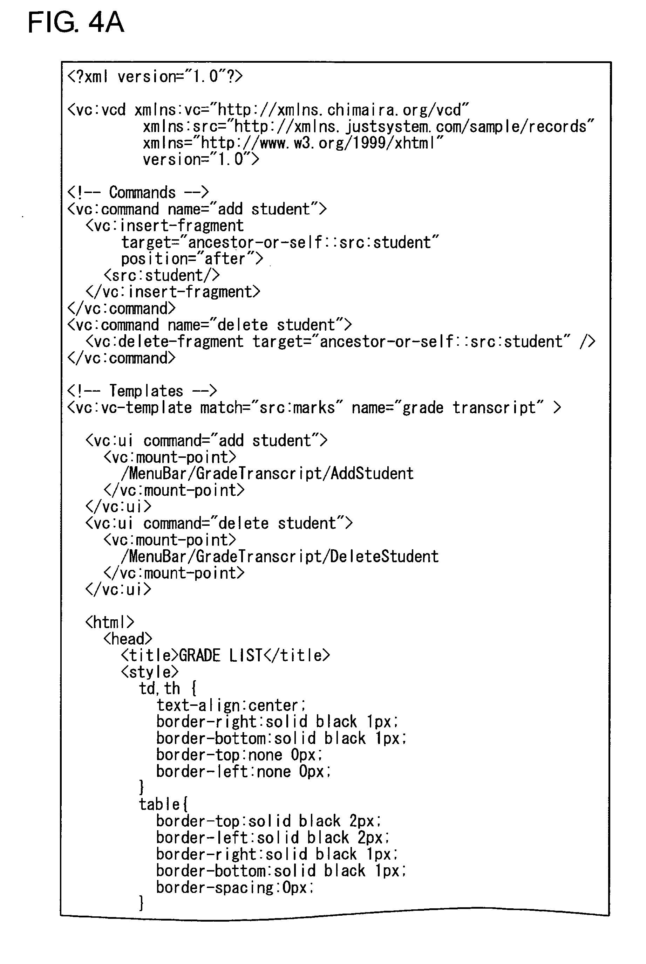

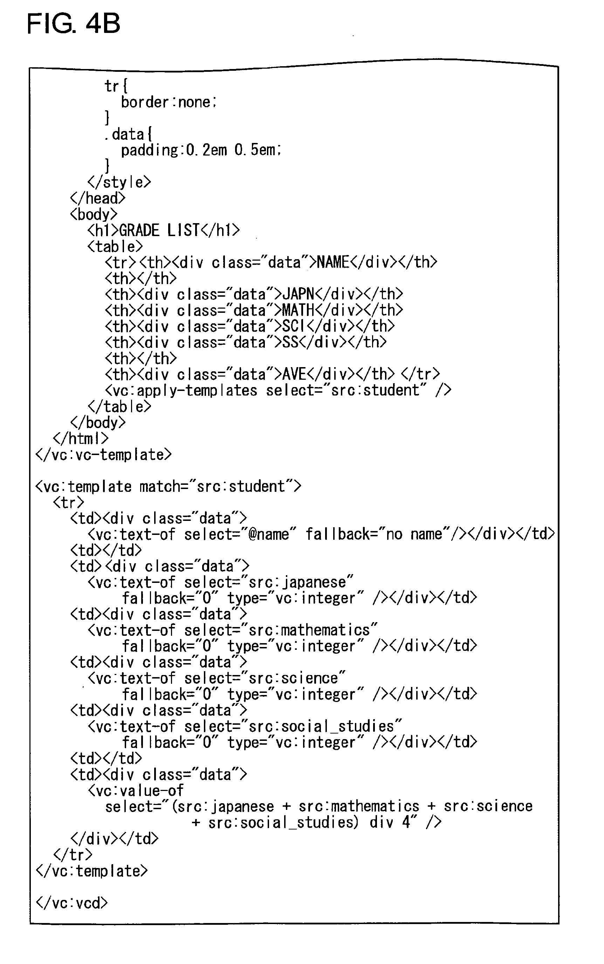

FIG. 4 illustrates an example of a definition file to map the XML document shown in FIG. 2 to the table shown in FIG. 3. This definition file is described in script language defined for use with definition files. In the definition file, definitions of commands and templates for display are described. In the example shown in FIG. 4, "add student" and "delete student" are defined as commands, and an operation of inserting a node "student" into a source tree and an operation of deleting the node "student" from the source tree, respectively, are associated with these commands. Furthermore, the definition file is described in the form of a template, which describes that a header, such as "name" and "japanese" is displayed in the first row of a table and the contents of the node "student" are displayed in the second and subsequent rows. In the template displaying the contents of the node "student", a term containing "text-of" indicates that editing is permitted, whereas a term containing "value-of" indicates that editing is not permitted. Among the rows where the contents of the node "student" are displayed, mathematical expression "(src:japanese + src:mathematics + scr:science + scr:social studies) div 4" is described in the sixth row. This means that the average of the student's marks is displayed.

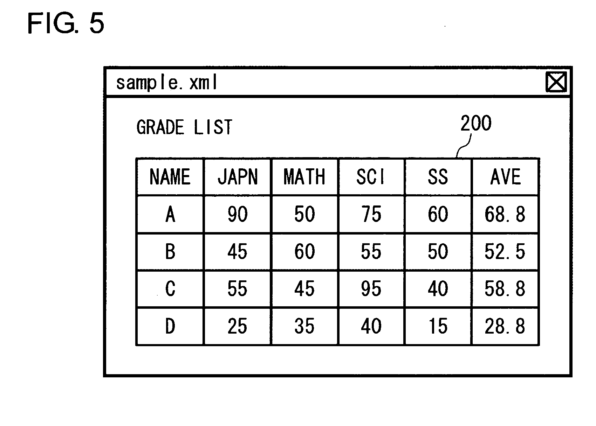

FIG. 5 shows an example of a display screen on which an XML document described in the marks managing vocabulary shown in FIG. 2 is displayed by mapping the XML document to HTML using the correspondence shown in Fig. 3. Displayed from left to right in each row of a table 200 are the name of each student, marks for Japanese, marks for mathematics, marks for science, marks for social studies and the averages thereof. The user can edit the XML document on this screen. For example, when the value in the second row and the third column is changed to "70", the element value in the source tree corresponding to this node, that is, the marks of student "B" for mathematics, are changed to "70". At this time, in order to have the destination tree follow the source tree, a relevant portion of the destination tree is changed accordingly, so that the HTML unit 150 updates the display based on the changed destination tree. Hence, the marks of student "B" for mathematics are changed to "70", and the average is changed to "55" in the table on the screen.

On the screen as shown in FIG. 5, commands like "add student" and "delete student" are displayed in a menu as defined in the definition file shown in FIG. 4. When the user selects a command from among these commands, a node "student" is added or deleted in the source tree. In this manner, with the document processing apparatus 100 according to the present embodiment, it is possible not only to edit the element values of components in a lower end of a hierarchical structure but also to edit the hierarchical structure. An edit function for editing such a tree structure may be presented to the user in the form of commands. Furthermore, a command to add or delete rows of a table may, for example, be linked to an operation of adding or deleting the node "student". A command to embed other vocabularies therein may be presented to the user. This table may be used as an input template, so that marks data for new students can be added in a fill-in-the-blank format. As described above, the VC function allows a document described in the marks managing vocabulary to be edited using the display/editing function of the HTML unit 150.

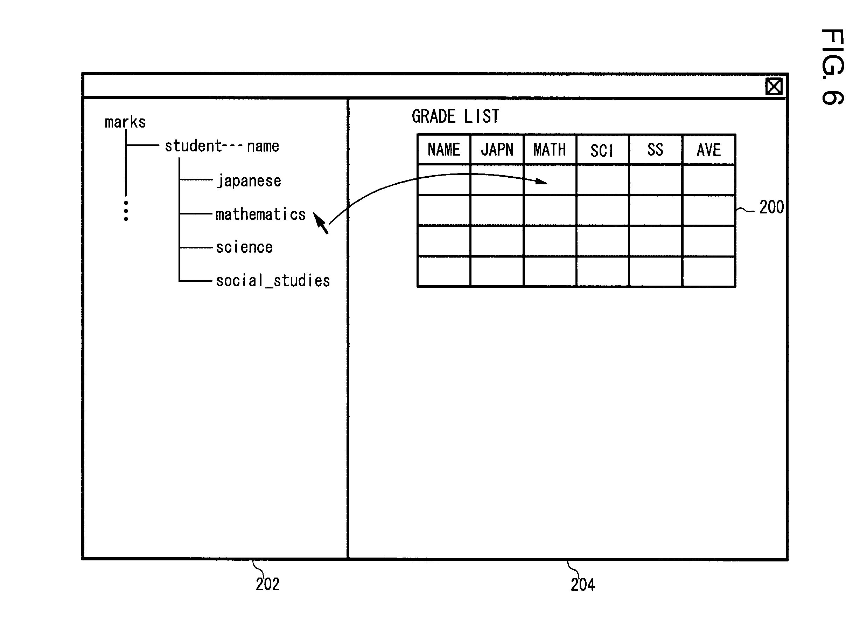

FIG. 6 shows an example of a graphical user interface, which the definition file generator 186 presents to the user, in order for the user to generate a definition file. An XML document to be mapped is displayed in a tree in a left-hand area 202 of a screen. The screen layout of an XML document after mapping is displayed in a right-hand area 204 of the screen. This screen layout can be edited by the HTML unit 150, and the user creates a screen layout for displaying documents in the right-hand area 204 of the screen. For example, a node of the XML document which is to be mapped, which is displayed in the left-hand area 202 of the screen, is dragged and dropped into the HTML screen layout in the right-hand area 204 of the screen using a pointing device such as a mouse, so that a connection between a node at a mapping source and a node at a mapping destination is specified. For example, when "mathematics," which is a child element of the element "student," is dropped at the intersection of the first row and the third column in a table 200 on the HTML screen, a connection is established between the "mathematics" node and a "TD" node in the third column. Either editing or no editing can be specified for each node. Moreover, the mathematical expression can be embedded in a display screen. When the screen editing is completed, the definition file generator 186 generates definition files, which describe the connections between the screen layout and the nodes.

Viewers or editors which can handle major vocabularies such as XHTML, MathML and SVG have already been developed. However, it does not serve any practical purpose to develop dedicated viewers or editors for such documents described in the original vocabularies as shown in FIG. 2. If, however, the definition files for mapping to other vocabularies are created as mentioned above, the documents described in the original vocabularies can be displayed and/or edited by utilizing the VC function without the need to develop a new viewer or editor.

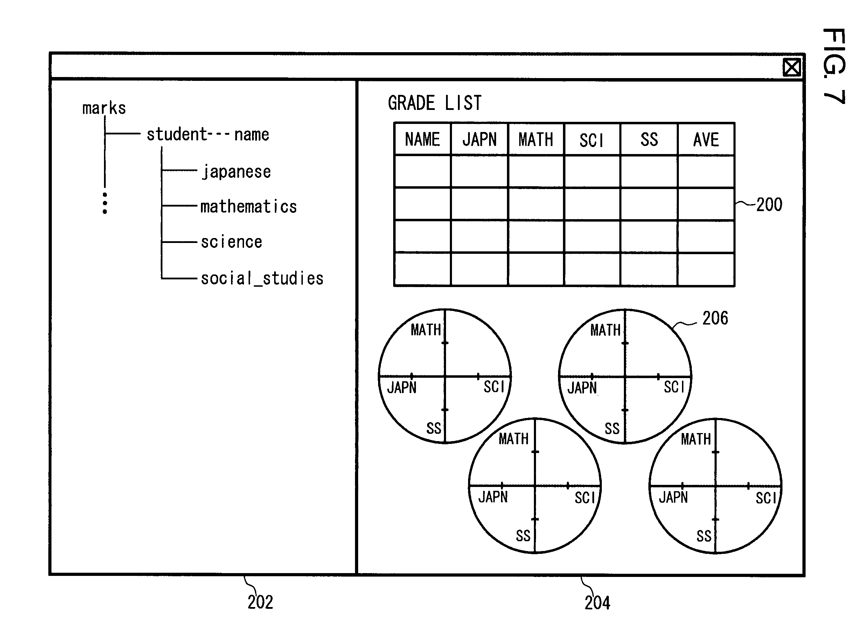

FIG. 7 shows another example of a screen layout generated by the definition file generator 186. In the example shown in FIG. 7, a table 200 and circular graphs 206 are created on a screen for displaying XML documents described in the marks managing vocabulary. The circular graphs 206 are described in SVG. As will be discussed later, the document processing apparatus 100 according to the present exemplary embodiment can process a compound document described in the form of a single XML document according to a plurality of vocabularies. That is why the table 200 described in HTML and the circular graphs 206 described in SVG can be displayed on the same screen.

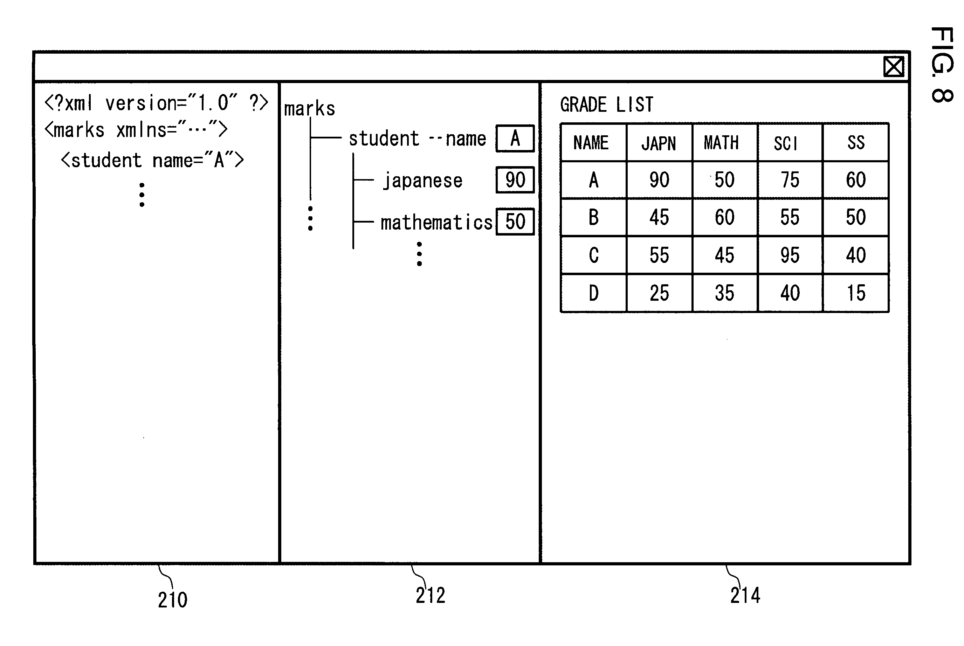

FIG. 8 shows an example of a display medium, which in a preferred but non-limiting embodiment is an edit screen, for XML documents processed by the document processing apparatus 100. In the example shown in FIG. 8, a single screen is partitioned into a plurality of areas and the XML document to be processed is displayed in a plurality of different display formats at the respective areas. The source of the document is displayed in an area 210, the tree structure of the document is displayed in an area 212, and the table shown in FIG. 5, and described in HTML, is displayed in an area 214. The document can be edited in any of these areas, and when the user edits content in any of these areas, the source tree will be modified accordingly, and then each plug-in that handles the corresponding screen display updates the screen so as to effect the modification of the source tree. Specifically, display units of the plug-ins in charge of displaying the respective edit screens are registered in advance as listeners for mutation events that provide notice of a change in the source tree. When the source tree is modified by any of the plug-ins or the VC unit 180, all the display units, which are displaying the edit screen, receive the issued mutation event(s) and then update the screens. At this time, if the plug-in is executing the display through the VC function, the VC unit 180 modifies the destination tree following the modification of the source tree. Thereafter, the display unit of the plug-in modifies the screen by referring to the destination tree thus modified.

For example, when the source display and tree-view display are implemented by dedicated plug-ins, the source-display plug-in and the tree-display plug-in execute their respective displays by directly referring to the source tree without involving the destination tree. In this case, when the editing is done in any area of the screen, the source-display plug-in and the tree-display plug-in update the screen by referring to the modified source tree. Also, the HTML unit 150, in charge of displaying the area 214, updates the screen by referring to the destination tree, which has been modified following the modification of the source tree.

The source display and the tree-view display can also be realized by utilizing the VC function. That is to say, an arrangement may be made in which the source and the tree structure are laid out in HTML, an XML document is mapped to the HTML structure thus laid out, and the HTML unit 150 displays the XML document thus mapped. In such an arrangement, three destination trees are generated: one in the source format, one in the tree format, and one in the table format. If the editing is carried out in any of the three areas on the screen, the VC unit 180 modifies the source tree and, thereafter, modifies the three destination trees, in the source format, the tree format, and the table format. Then, the HTML unit 150 updates the three areas of the screen by referring to the three destination trees.

In this manner, a document is displayed on a single screen in a plurality of display formats, thus improving the convenience to a user. For example, the user can display and edit a document in a visually easy-to-understand format using the table 200 or the like, while understanding the hierarchical structure of the document by the source display or the tree display. In the above example, a single screen is partitioned into a plurality of display formats, and they are displayed simultaneously. Also, a single display format may be displayed on a single screen so that the display format can be switched according to the user's instructions. In this case, the main control unit 110 receives from the user a request to switch the display format, and then instructs the respective plug-ins to switch the display.

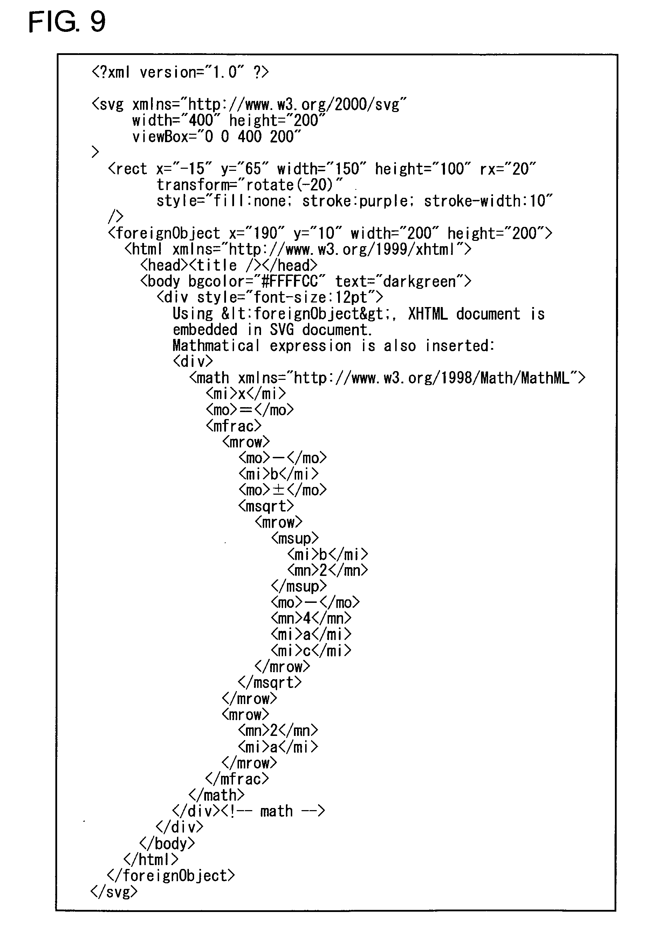

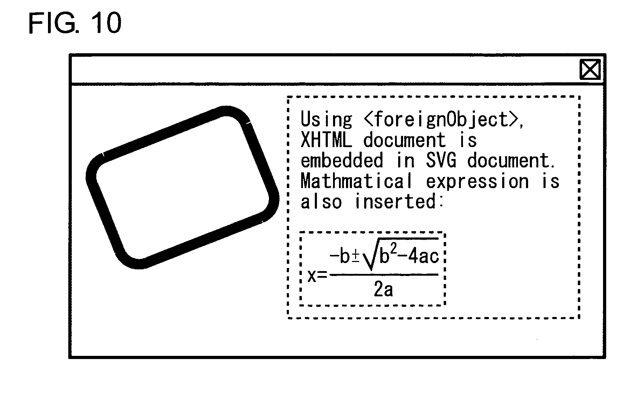

FIG. 9 illustrates another example of an XML document edited by the document processing apparatus 100. In the XML document shown in FIG. 9, an XHTML document is embedded in a "foreignObject" tag of an SVG document, and the XHTML document contains an equation described in MathML. In this case, the editing unit 120 assigns the rendering job to an appropriate display system by referring to the name space. In the example illustrated in FIG. 9, first, the editing unit 120 instructs the SVG unit 160 to render a rectangle, and then instructs the HTML unit 150 to render the XHTML document. Furthermore, the editing unit 120 instructs a MathML unit (not shown) to render an equation. In this manner, a compound document containing a plurality of vocabularies is appropriately displayed. FIG. 10 illustrates the resulting display.

When the user edits a document on an edit screen as shown in FIG. 10, a plug-in or a VC unit 180, which is in charge of processing the edited portion, modifies the source tree. A listener for mutation events can be registered for each node in the source tree. Normally, a display unit of the plug-in or the VC unit 180 conforming to a vocabulary that belongs to each node is registered as the listener. When the source tree is modified, the DOM provider 132 traces upward in the node hierarchy from the modified node. If there is a registered listener, the DOM provider 132 issues a mutation event to the listener. For example, referring to the document shown in FIG. 9, if a node which lies lower than the <html> node is modified, the mutation event is sent in a notification to the HTML unit 150, which is registered as a listener to the <html> node. At the same time, the mutation event is also sent in a notification to the SVG unit 160, which is registered as a listener to an <svg> node, which lies above the <html> node. At this time, the HTML unit 150 updates the display by referring to the modified source tree. Since the nodes belonging to the vocabulary of the SVG unit 160 itself are not modified, the SVG unit 160 may disregard the mutation event.

Depending on the contents of the editing, modification of the display by the HTML unit 150 may change the overall layout. In such a case, the layout is updated by a screen layout management mechanism, e.g., the plug-in that handles the display of the highest node updates the display in increments of display regions, which are displayed according to the respective plug-ins. For example, in the case of expanding a display region managed by the HTML unit 150, first the HTML unit 150 renders a part managed by the HTML unit 150 itself, and determines the size of the display region. Then, the size of the display area is sent in a notification to the component that manages the screen layout so as to request the updating of the layout. Upon receipt of this notice, the component that manages the screen layout rebuilds the layout of the display area for each plug-in. Accordingly, the display of the edited portion is appropriately updated and the overall screen layout is updated.

The displayed menu may be switched corresponding to the position of the cursor (carriage) during the editing of a document. That is, when the cursor lies in an area where an SVG document is displayed, the menu provided by the SVG unit 160, or a command set which is defined in the definition file for mapping the SVG document, is displayed. On the other hand, when the cursor lies in an area where the XHTML document is displayed, the menu provided by the HTML unit 150 is displayed, or alternatively, a command set which is defined in the definition file for mapping the HTML document is displayed. Thus, an appropriate user interface can be presented according to the editing position.

In the case that there is neither a plug-in nor a mapping definition file suitable for any one of the vocabularies according to which the compound document has been described, a portion of the compound document described in this vocabulary may be displayed in source or in tree format. In the conventional practice, when a compound document is to be opened which contains an embedded document, the contents cannot be displayed without the installation of an application to display the embedded document. According to the present embodiment, however, the XML documents, which are composed of text data, may be displayed in source or in tree format so that the contents of the documents can be ascertained. This is a characteristic of the text-based XML documents or the like.

In a document described in a particular vocabulary, tags belonging to other vocabularies may be used. Though such an XML document is generally not valid, it can be processed as a valid XML document as long as it is well-formed. In such a case, the tags thus inserted that belong to other vocabularies may be mapped using a definition file. For instance, tags such as "Important" and "Most Important" may be used so as to display a portion surrounding these tags in an emphasized manner, or may be sorted out in the order of importance.

Another advantageous aspect of the data being described in a text-based language, for example, is that a section described in a certain vocabulary within a compound document can be processed with reference to another section described in another vocabulary within the same compound document. For example, such an arrangement allows a calculation expression and so forth to be processed with reference to the data of a section described in another vocabulary. Also, such an arrangement allows the user to search an HTML document using a text string embedded in an SVG picture and so forth as a search key. With conventional techniques, an application handles a document which includes an embedded document, or embedded data created by another application, without identifying the format of the embedded data. That is to say, such a conventional application cannot properly interpret such embedded data. Accordingly, the embedded data is handled as so-called black-box data which cannot be referred to by the application. Consider a new application for handling such a compound document, operable to dentify the format of the embedded data, and to appropriately interpret the contents of the data. Such an arrangement allows the application to handle a section in a document with reference to embedded data included in another section in the document. XML documents are text-based documents. Accordingly, such an arrangement is appropriate for application to XML documents. The document processing apparatus 100, according to a second embodiment, will be described below.

### (Second embodiment)

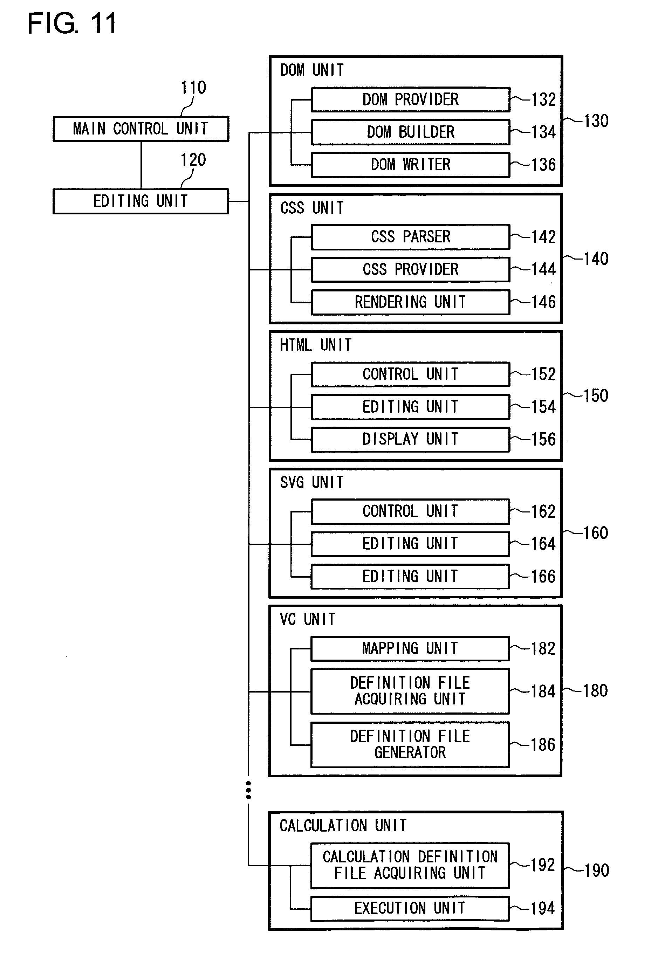

Fig. 11 shows an overall configuration of the document processing apparatus 100 according to a second embodiment of the present invention. The document processing apparatus 100 according to the present embodiment has the same configuration as the document processing apparatus 100 according to the first embodiment shown in Fig. 1, except for further including a calculation unit 190 which is a plug-in for executing calculation processing of data with another data set as reference data. The calculation unit 190 performs processing of a document described in the "calculation" vocabulary, a vocabulary used for describing calculation expressions and so forth. Let us consider the case in which element values or attribute values of an element included in a processing target document are described as a calculation expression with another data set as reference data. In this case, the calculation unit 190 executes a calculation according to the calculation expression after acquiring the reference data, and substitutes the calculation results for the element values or the attribute values. The reference data may be described in the same vocabulary as that of the data which references it, or may be described in a different vocabulary. Also, data described in another document may be used as reference data. In the event of a need to utilize another document as reference data, the document processing apparatus 100 reads out a document including the reference data, thereby acquiring the reference data. The document processing apparatus 100, according to the second embodiment, has the same configuration and the same operation as those of the first embodiment, except for the configuration and operation described above. Similar elements are denoted by the same reference numerals.

The calculation unit 190 includes: a calculation definition file acquiring unit 192, operable to acquire a calculation definition file described in a calculation vocabulary; and an execution unit 194 for executing a calculation according to a calculation expression described in the calculation definition file. Let us consider the case in which the document read out specifies that processing should be performed with an external calculation definition file as reference data. In this case, the calculation definition file acquiring unit 192 acquires the calculation definition file, and the execution unit 194 executes a calculation according to the calculation expression described in the calculation definition file. The calculation results are then substituted for the element values or the attribute values. On the other hand, if the reference data used for the calculation expression has been updated, the execution unit 194 receives a mutation event which is a notification that the node including the reference data has been updated, and executes a calculation again according to the calculation expression. The calculation results are substituted for the data which is to be processed using the reference data. Upon the update of the data which is to be processed using the reference data, the dedicated plug-in for displaying the node updates a display according to the calculation results.

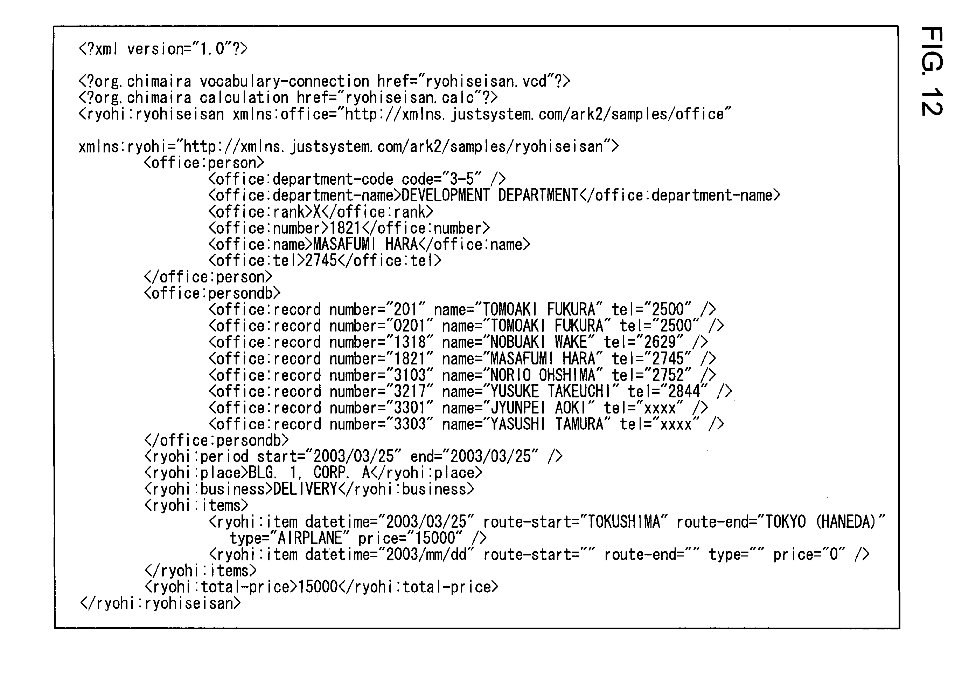

Fig. 12 shows an example of a document processed by the document processing apparatus 100 according to the present embodiment. An XML document is used for making an application for travel expenses for business travel. The XML document is described in a vocabulary "ryohi", which is a vocabulary for travel expenses claim settlement, and a vocabulary "office" which is a vocabulary for staff data management. The header of the document declares that the document should be displayed using a VC function with reference to a VC definition file "ryohiseisan.vcd", and that calculation should be executed with reference to a calculation definition file "ryohiseisan.calc".

In this document, the top node consists of the element "ryohiseisan", which is an element of the "ryohi" vocabulary. The top node includes sub-elements "person" and "persondb", which are elements of the "office" vocabulary, and the sub-elements "period", "place", "business", "items", and "total-price", which are elements of the "ryohi" vocabulary. The element "person" stores the data of the applicant for travel expenses, and has certain sub-elements. The sub-elements of the element "person" include: "department-code", which is a sub-element for storing the code for the department to which the applicant belongs; "department-name", which is a sub-element for storing the name of the department to which the applicant belongs; "rank", which is a sub-element for storing the rank of the applicant; and "tel", which is a sub-element for storing the telephone number of the applicant. On the other hand, the element "persondb" stores the staff data, and has multiple "record" sub-elements. Each "record" sub-element has certain attribute values, e.g., the staff number "number", the name "name", and the telephone number "tel". The element "period" stores the travel period. The attribute values of the "period" include: the attribute value "start" for storing the start date; and the attribute value "end" for storing the completion date. The element "place" stores the travel destination. The element "business" stores the business purpose of the travel. The element "items" stores the details of the travel expenses, and has multiple "item" sub-elements. Each "item" sub-element has multiple attribute values, i.e., the date attribute value "datetime", the starting point attribute value "route-start", the travel type attribute value "type", and the price attribute value "price". The element "total-price" stores the total of the travel expenses. The total of the travel expenses is calculated according to a calculation expression described in a calculation definition file as described later.

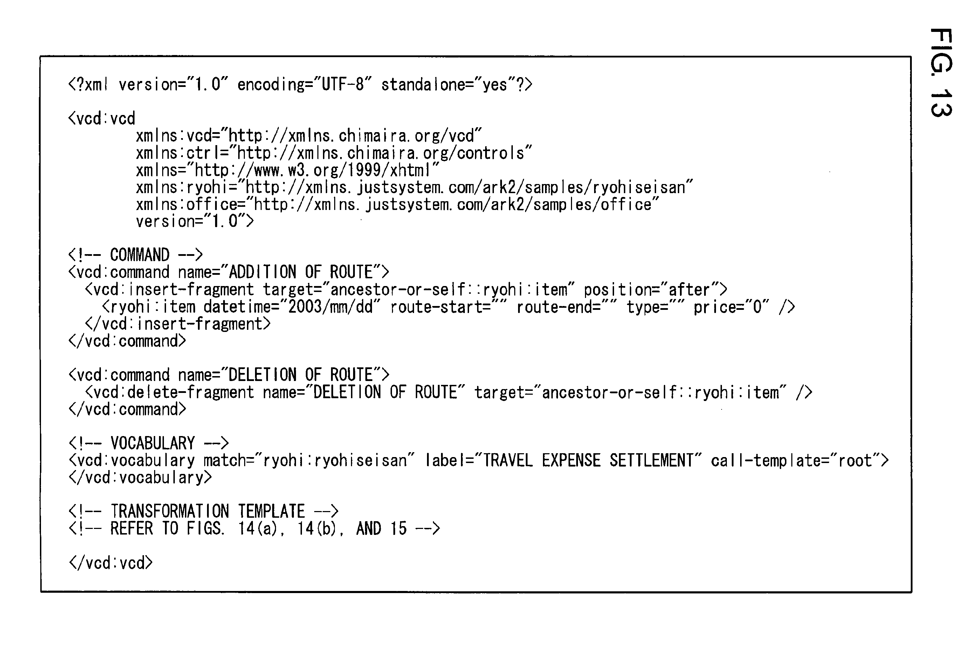

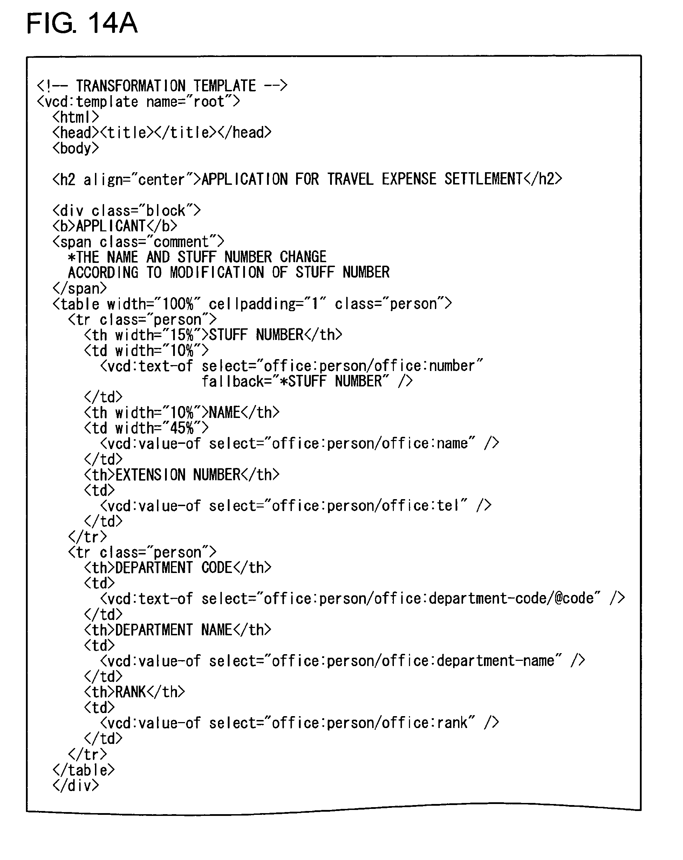

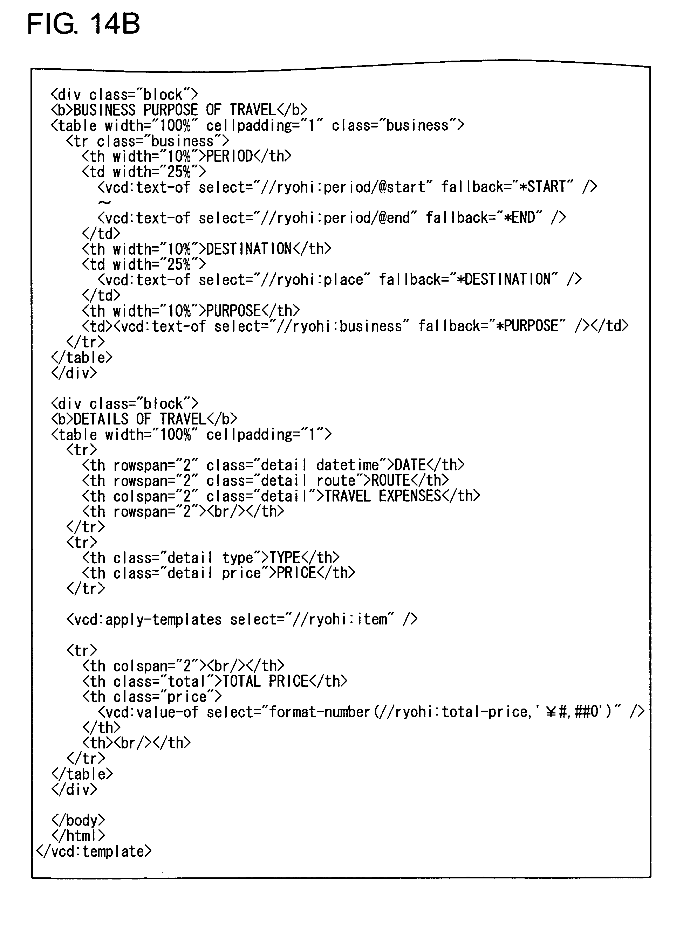

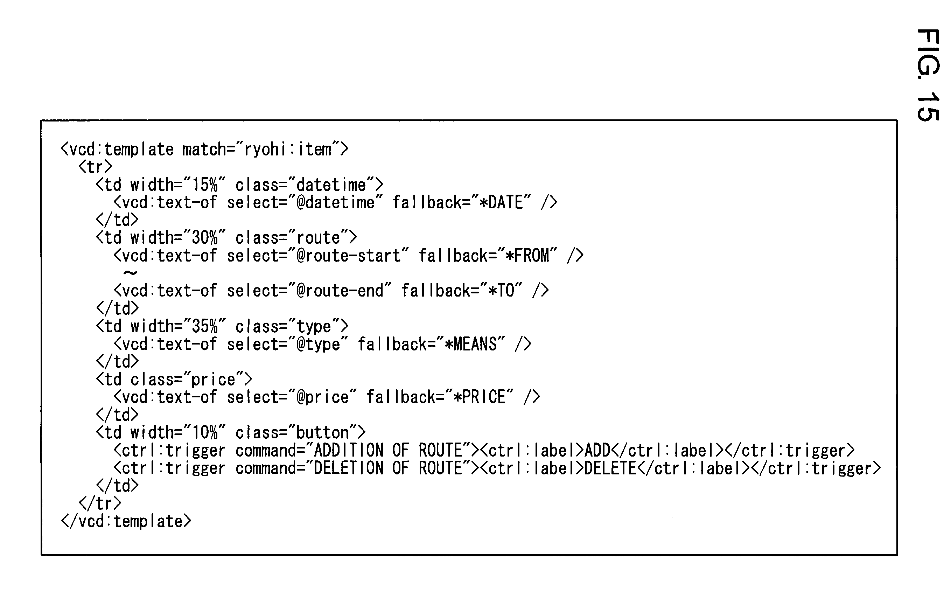

Fig. 13 shows an example of a VC definition file for displaying the XML document shown in Fig. 12 using the VC function. The VC definition file "ryohisaisan.vcd" specifies the definition of each command and a display template. In the example shown in Fig. 13, the VC definition file defines the command "addition of route", and the command "deletion of route", which are linked to the operation of inserting the node "ryohi:item" into the source tree, and the operation of deleting the node "ryohi:item" from the source tree, respectively. Note that, in practice, the VC definition file shown in Fig. 13 also specifies the display template in the "conversion template" section. Figs. 14 and 15 show the display template in a divided form.

Fig. 14 shows an example of the display template described in the VC definition file shown in Fig. 13. The XML document shown in Fig. 12 is displayed after being converted into an HTML document according to the template shown in Fig. 14. Note that the part of the template that specifies the display style is omitted. The node "office:person/office:number" for storing a staff number specifies the element "text-of", which indicates that editing is permitted. On the other hand, the nodes "office:person/office:name" for storing the name of a staff member and "office:person/office:tel" for storing an extension number each specify the element "value-of", which indicates that editing is not permitted. The reason why editing of the name of the staff member and the extension number is not permitted is that the calculation unit 190 automatically changes the name of the staff member and the extension number according to the user's changing of the staff number, as described below.

Fig. 15 shows an example of the template for displaying the element "ryohi:item", which stores the details of the business travel route for travel expenses, one of the display templates described in the VC definition file shown in Fig. 13. This display template provides an "add" button which allows a route to be added, and a "delete" button which allows a route to be deleted, for each row of the table that displays the details of the travel expenses. Here, the "add" button and the "delete" button are linked to the commands "addition of route", and "deletion of route", respectively, which are defined in the VC definition file. With such an arrangement, when the user clicks the respective buttons, the corresponding command is executed.

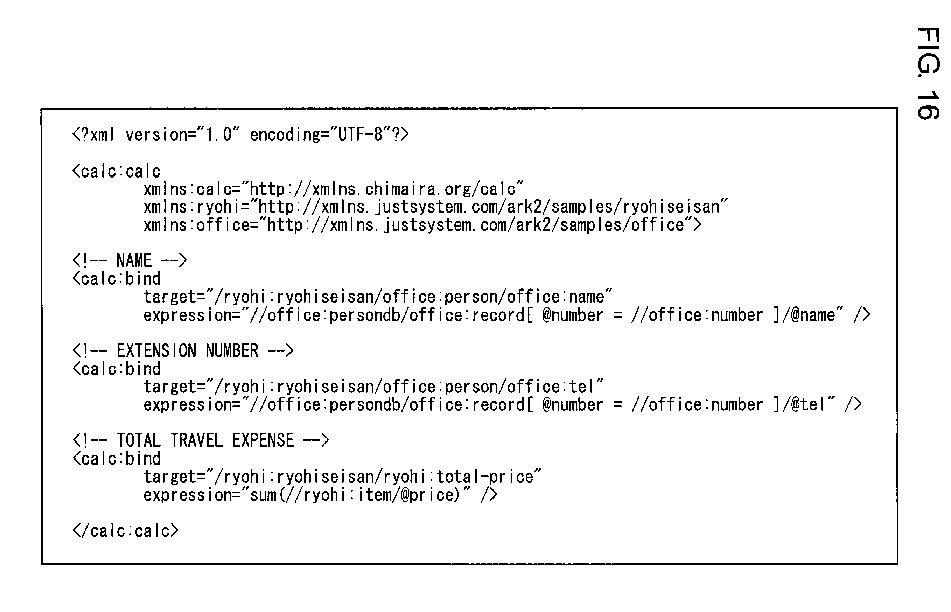

Fig. 16 shows an example of the calculation definition file applied to the XML document shown in Fig. 12. The calculation definition file is described in a vocabulary for describing calculation expressions. The first "calc:bind" element specifies that the attribute value "name" from the node "office:record" corresponding to the number specified by the "office:number", which is a node under the node "office:persondb" hierarchy, is substituted for the node "ryohi:ryohiseissan/office:person/office:name". That is to say, upon changing the staff number of the applicant, the name of the staff member corresponding to the new staff number is substituted for the name of the applicant. On the other hand, the second "calc:bind" element specifies that, upon changing the staff number of the applicant, the extension number corresponding to the staff number is substituted for the extension number of the applicant in the same way. The third "calc:bind" element specifies that the sum of the attribute values "price" of the node "ryohi:item" is substituted for the node "ryohi:ryohiseisam/rgibu:total-price". That is to say, the sum of the details of the travel expenses is substituted for the total of the travel expenses.

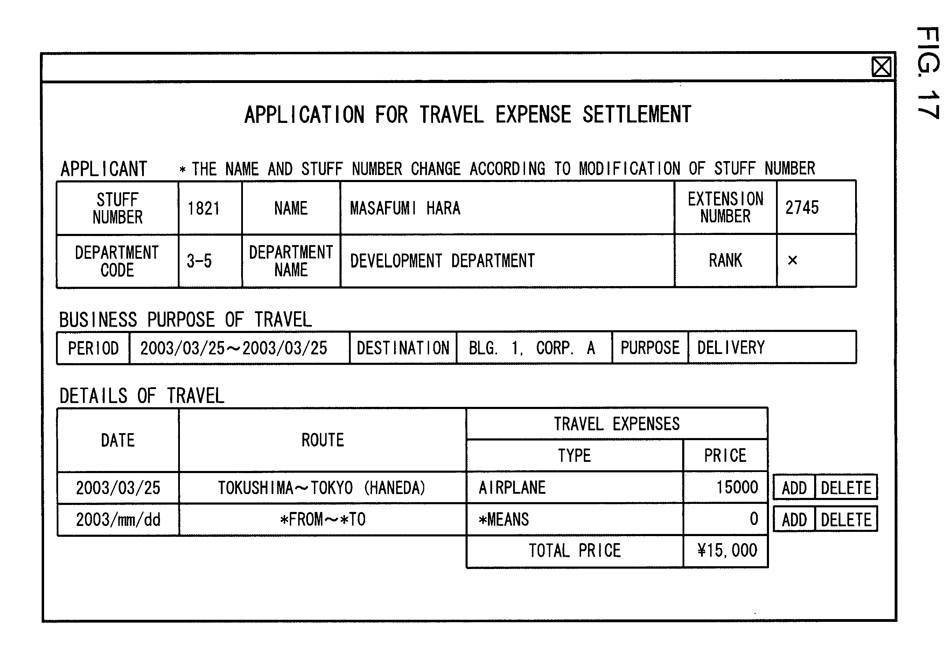

Fig. 17 shows an example of a screen on which the document shown in Fig. 12 is displayed according to the VC definition file shown in Figs. 13 through 15. The contents of the second sub-element "ryohi:item", which is one of the sub-elements of the element "ryohi:items" in the document shown in Fig. 12, are displayed along the second row of the table displaying the travel details. In this document, no values have been set for the attribute values "route-start", "route-end", and "type". In this case, alternate text is displayed for each attribute value by default according to the definition described in the VC definition file shown in Fig. 15.

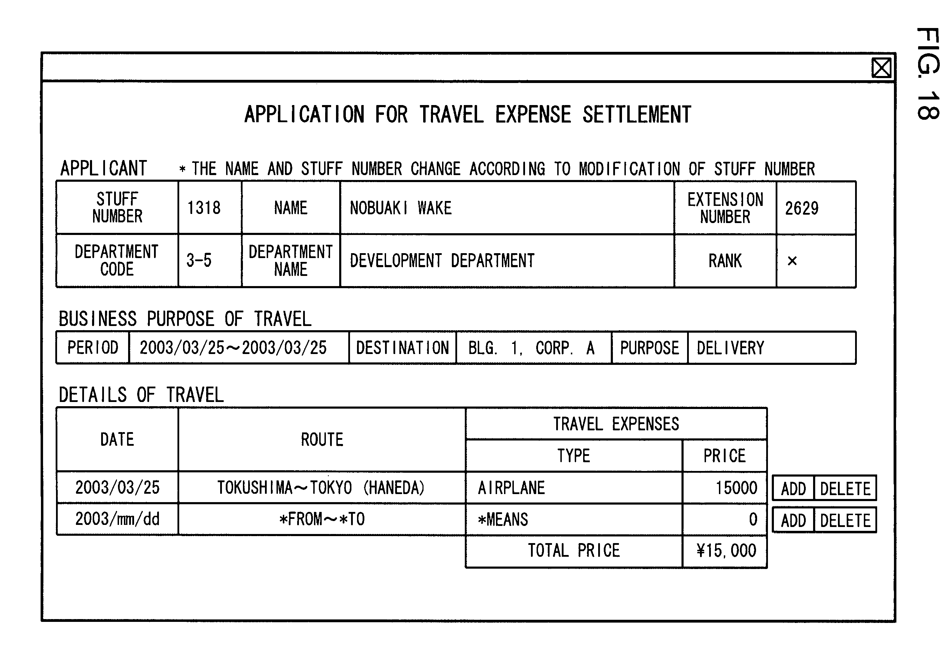

Fig. 18 shows an example of an editing screen shown in Fig. 17, after the user has changed the staff number. Upon the user's changing of the staff number in the stuff number field from "1821" to "1318", first, the corresponding node of the source tree is changed to "1318". At the same time, a mutation event that indicates that this node has been changed is issued for the calculation unit 190. Upon reception of the mutation event, the execution unit 194 of the calculation unit 190 modifies the source tree according to the rules described in the calculation definition file. Here, the name of the applicant and the extension number are changed. Upon modification of the source tree, a mutation event is issued to that effect for the VC unit 180. Upon reception of this mutation event, the VC unit 180 modifies the destination tree. Furthermore, a mutation event indicating that the destination tree has been modified is issued for the HTML unit 150, whereby the HTML unit 150 updates the display.

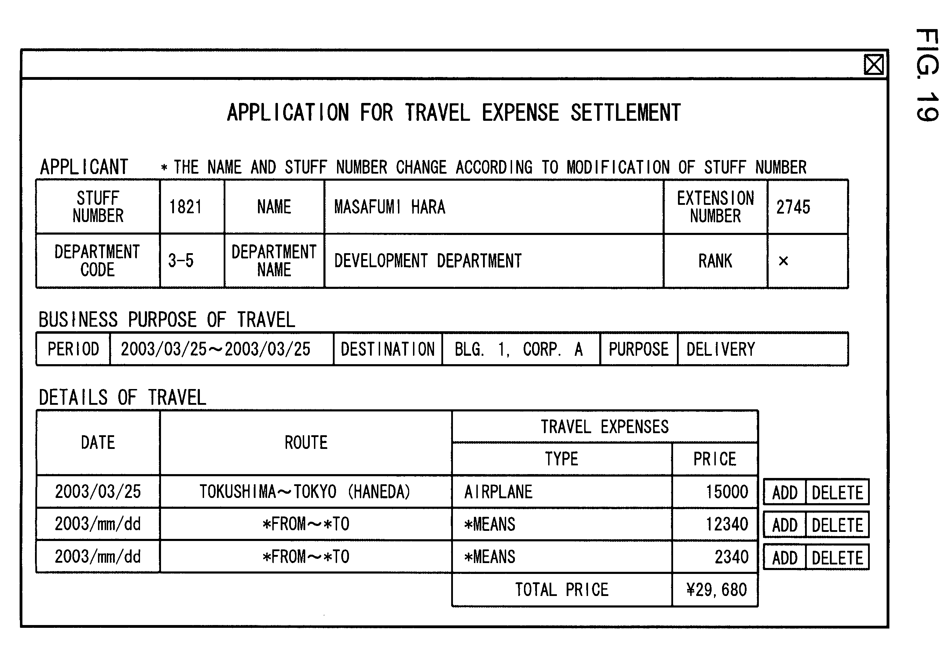

Fig. 19 shows an example of an editing screen shown in Fig. 17, after the user has added the item details for business travel, and has changed the travel expenses. Upon the user's clicking of the addition button, the node "ryohi:item" is added to the source tree according to the definition of the command described in the VC definition file, whereby a row for the item details for the business travel is added to the table. Furthermore, upon the user's entering of travel expenses, the execution unit 194 of the calculation unit 190 updates the sum of the travel expenses. Then, the display is updated in the same way as the procedure described above.

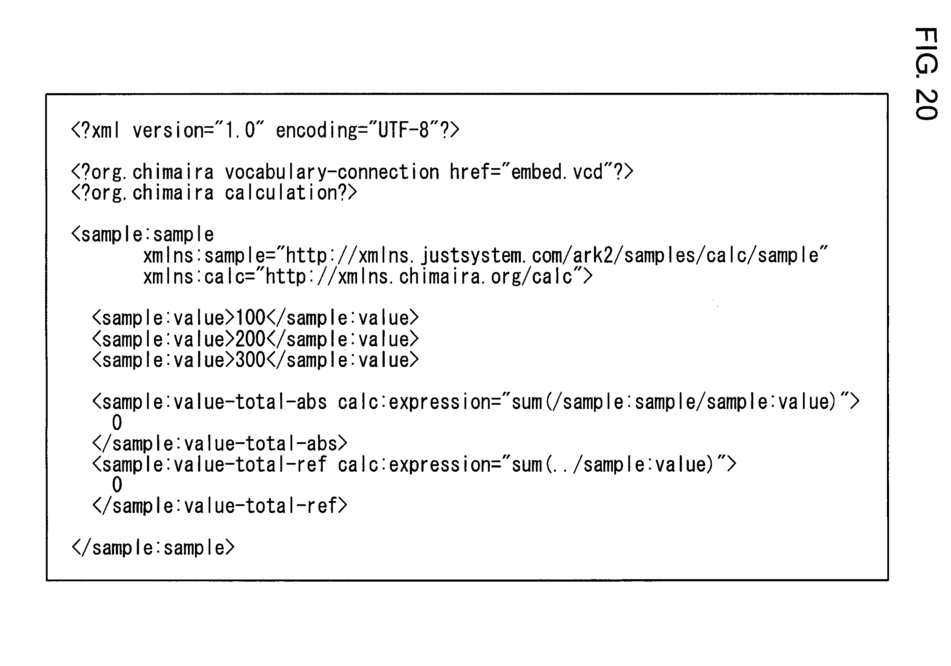

Fig. 20 shows another example of a document processed by the document processing apparatus 100 according to the present embodiment. The XML document is described in the vocabulary "sample" and the calculation vocabulary "calculation". The header of the document declares that the document should be displayed using a VC function with reference to a VC definition file "embed.vcd", and that calculation should be executed by the calculation unit 190.

In this document, the top node consists of the element "sample", which is an element of the "sample" vocabulary. The top node includes the sub-element "value", the sub-element "value-total-abs", and the sub-element "value-total-ref". The element "value" stores the reference value used for the calculation expression. The elements "value-total-abs" and "value-total-ref" each store the sum of the elements "value". The elements "value-total-abs" and "value-total-ref" each include the attribute value "calc:expression". The attribute value "calc:expression" specifies a calculation expression for calculating the sum of the elements "value", whereby the calculation results are stored as an element value. The attribute value "calc:expression" of the element "value-total-abs" specifies the reference node in the form of an absolute path. On the other hand, the attribute value "calc:expression" of the element "value-total-ref" specifies the reference node in the form of a relative path. In either case, the same node "sample:value" is used as a reference, and accordingly, the same sum is calculated.

The attribute "calc:expression" is specified as a global attribute with a name space prefix. The global attribute can be specified as an attribute having the same meaning for any element of any vocabulary. Specifically, the attribute "calc:expression" provides a function as the attribute "expression" that represents a calculation expression defined in the vocabulary "calculation" for any element of an arbitrary vocabulary. Thus, the calculation unit 190 calculates the value of the calculation expression described as an attribute value, and the calculation results are substituted for the element value of the corresponding element.

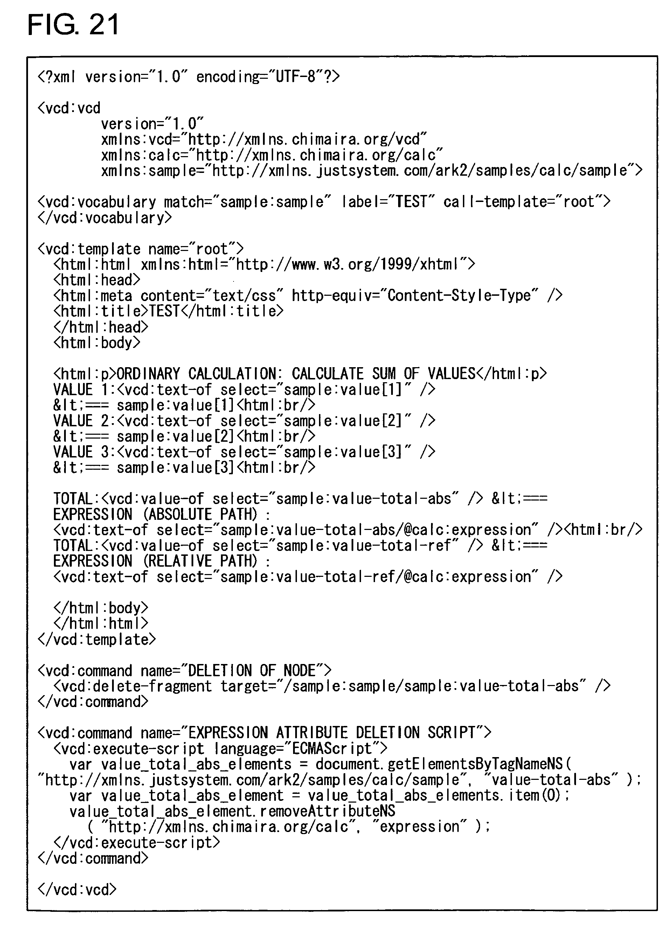

Fig. 21 shows an example of a VC definition file for displaying the XML document shown in Fig. 20 using the VC function. The VC definition file "embed.vcd" specifies the definition of each command and a display template. In the example shown in Fig. 20, the VC definition file defines the command "deletion of a node" and the command "expression attribute deletion script", which are linked to the operation for deleting the node "sample:sample/sample:value-total-abs", and the operation for deleting the attribute "calc:expression", which specifies a calculation expression, from the node "sample:sample/sample:value-total-abs", respectively.

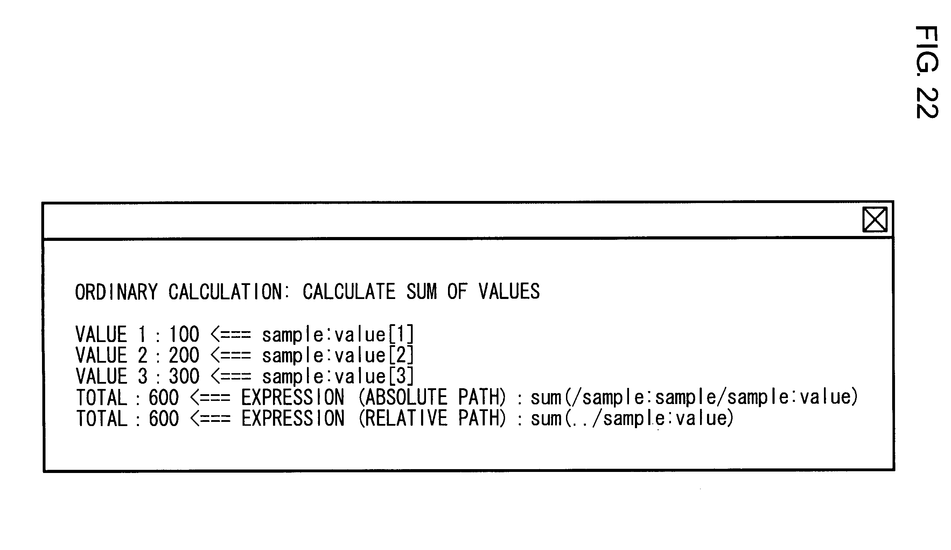

Fig. 22 shows an example of a screen on which the document shown in Fig. 20 is displayed according to the VC definition file shown in Fig. 21. In this example, the execution unit 194 of the calculation unit 190, which is realized in the form of a calculation plug-in, calculates the sum of the element value "100" of the first element "sample:value", the element value "200" of the second element "sample:value", and the element value "300" of the third element "sample:value". The calculation results are substituted for the elements "sample:value-total-abs" and "value-total-ref", thereby displaying the calculation results.

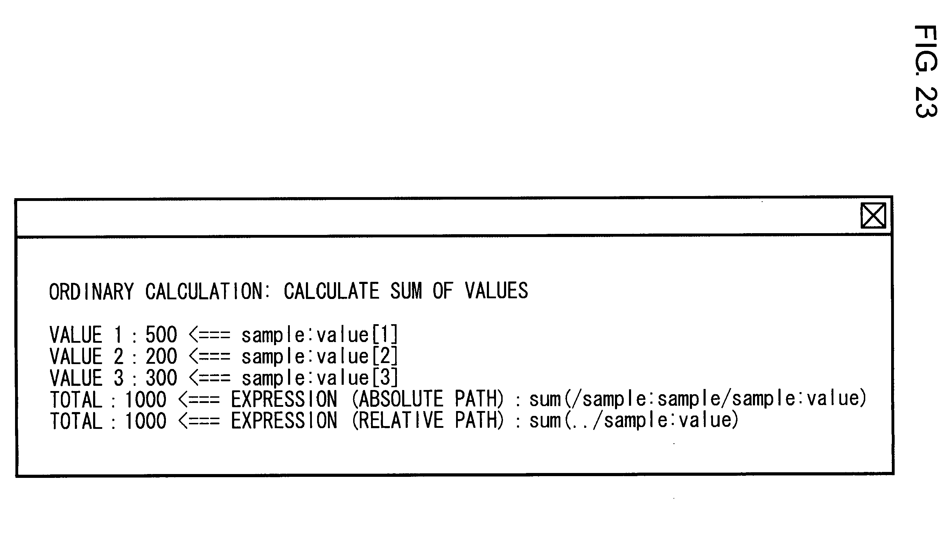

Fig. 23 shows an example of an editing screen shown in Fig. 22, after the user has changed the sample value 1. Upon the user's changing of the sample value 1 from "100" to "500" in the field for the sample value 1, the element value of the corresponding node "sample:sample/sample:value" of the source tree is changed to "500". At the same time, a mutation event that indicates that this node has been changed is issued for the calculation unit 190. Upon receipt of the mutation event, the execution unit 194 of the calculation unit 190 modifies the source tree according to the calculation expressions described in the attribute values of the element "sample:sample/sample:value-total-abs" and the element "sample:sample/sample:value-total-ref". In this example, the sum of the sample values is changed. Upon modification of the source tree, a mutation event is issued to that effect for the VC unit 180. Upon receipt of this mutation event, the VC unit 180 modifies the destination tree. Furthermore, a mutation event that indicates that the destination tree has been modified is issued for the HTML unit 150, whereby the HTML unit 150 updates the display.

As described above, the document processing apparatus 100 according to the present embodiment enables a calculation expression described in a calculation definition file, and a calculation expression described in an element of an XML document in the form of a global attribute, to utilize another data set as reference data. This allows the data within a document to be more effectively utilized. Note that the calculation expression may be in any desired form. Examples of such calculation expressions which can be employed in the present embodiment include: a calculation expression for substituting the same data for multiple elements used for synchronizing data between the multiple elements; arithmetic expressions; and character string processing.

Description has been made regarding the present invention with reference to the embodiments. The above-described embodiments have been described for exemplary purposes only, and are by no means intended to be interpreted restrictively. Rather, it can be readily conceived by those skilled in this art that various modifications may be made by making various combinations of the aforementioned components, which are also encompassed in the technical scope of the present invention.

Although the aforementioned embodiment describes an arrangement in which an XML document is processed, the document processing apparatus 100 according to the aforementioned embodiment also is capable of processing a document described in other markup languages such as SGML, HTML, etc., in the same way.

### Industrial Applicability

The present invention can be applied to a document processing apparatus for processing a document described in a markup language.

## Claims

1. A document processing apparatus comprising:
a processing system operable to display a document described in a markup language, and operable to allow a user to edit the document; and
a calculation unit operable, if the element value or the attribute value of an element included in the document is described as a calculation expression with reference to another data set, to acquire the referenced data set in order to execute the calculation expression, and to substitute the calculation results for the element value or the attribute value.

2. A document processing apparatus according to Claim 1, wherein the calculation expression is described in a markup language for describing the calculation expression.

3. A document processing apparatus according to Claim 1 or 2, wherein the calculation expression is described in a definition file which is an external reference file referenced by the document.

4. A document processing apparatus according to any one of Claims 1 through 3, wherein the referenced data is described in another markup language different from that which describes the element which references the referenced data.

5. A document processing apparatus according to any one of Claims 1 through 4, wherein upon modification of the referenced data, said calculation unit executes a calculation according to the calculation expression, and substitutes the calculation results for the element value or the attribute value.

6. A document processing apparatus according to any one of Claims 1 through 5, further comprising:
a creating unit for creating document object model data in a format based upon a document object model so as to provide an access method for processing a document in the form of data,
wherein said creating unit creates document object model data corresponding to the document,
and said processing system displays the document with reference to the document object model data.

7. A document processing apparatus according to Claim 6, wherein said calculation unit identifies and acquires the referenced data from the document object model data.

8. A document processing method comprising:
before a document described in a markup language is displayed on a display device, making a determination whether or not the element value or the attribute value of an element included in the document is described as a calculation expression using another data set as referenced data; and
when the element value or the attribute value is described as a calculation expression, acquiring the referenced data in order to execute a calculation according to the calculation expression, and substituting the calculation results for the element value or the attribute value.

9. A computer program that provides a computer with a function of:
before a document described in a markup language is displayed on a display device, making a determination whether or not the element value or the attribute value of an element included in the document is described as a calculation expression using another data set as referenced data; and
when the element value or the attribute value is described as the calculation expression, acquiring the referenced data in order to execute a calculation according to the calculation expression, and substituting the calculation results for the element value or the attribute value.
